# EUROPÄISCHE PATENTSCHRIFT

(11) **EP 1 321 694 B1**
(45) Veröffentlichungstag und Bekanntmachung des Hinweises auf die Patenterteilung: **09.05.2007**
(21) Anmeldenummer: 02026617.7
(22) Anmeldetag: 29.11.2002
(51) Int. Cl.: F16F 9/05

(54) **Schlauchrollbalg-Feder**
Tubular rolling lobe spring
Ressort à soufflet roulant tubulaire

(30) Priorität: 22.12.2001 DE 10163818
(43) Veröffentlichungstag der Anmeldung: 25.06.2003
(73) Patentinhaber: ContiTech Luftfedersysteme GmbH, 30165 Hannover (DE)
(72) Erfinder: Thurow, Gerhard, 30823 Garbsen (DE); Bank, Christoph, 31275 Lehrte (DE); Cerny, Paul, 30974 Wennigsen (DE); Gönnheimer, Peter, 71384 Weinstadt (DE); Frey, Joachim, 73614 Schorndorf (DE)
(74) Vertreter: Finger, Karsten

(56) Entgegenhaltungen:
- US-A- 3 244 013
- US-A- 4 899 995
- US-A- 5 374 037
- US-A- 5 460 354

## Beschreibung

Die im Oberbegriff des Anspruchs 1 genannten gattungsbildenden Merkmale einer im wesentlichen aus Schlauchrollbalg und Abrollkolben bestehenden Schlauchrollbalg-Feder mit mindestens einer aus Anschlussteil und Spannring bestehenden Klemmeinheit zur druckdichten Befestigung des aus elastomerem Material bestehenden, kernlosen, keine Endwülste aufweisenden und mit einer Verstärkungseinlage versehenen Schlauchrollbalgs an den Deckel und/oder den Abrollkolben der Schlauchrollbalg-Feder sind aus der Offenlegungsschrift DE 33 46 108 A1 vorbekannt.

Mit kompressiblem oder inkompressiblem Medium gefüllte Schlauchrollbalg-Federn - insbesondere Schlauchrollbalg-Luftfedern - werden vorzugsweise in Straßen-Kraftfahrzeugen zur Abfederung der Fahrzeugaufbauten gegen Straßen-Unebenheiten eingesetzt. Zunehmend kommen Schlauchrollbalg-Federn auch zur Abfederung von Fahrersitzen, Fahrerhaus und Industrielagerungen zum Einsatz.

Üblicherweise werden die Enden der als einfache, ohne Endwülste ausgebildeten Schlauchkörper mit Hilfe von metallenen Spannringen einerseits am (Luft-)Federdeckel und andererseits am Abrollkolben befestigt.

Gemäß dem mit DE 32 46 962 A1 i.V.m. DE 33 46 108 A1 geoffenbarten Stand der Technik sind die Befestigungsbereiche von Luftfederdeckel und Abrollkolben zwecks Vereinfachung der Montage jeweils mit einer eingezogenen Anschlagfläche ausgestattet, wobei zumindest ein axialer Teilabschnitt der eingezogenen Anschlagfläche des Abrollkolbens mit aufgesetzten Umfangsrippen von vorzugsweise dreieckiger Querschnittsform versehen ist.
Gemäß DE 33 46 108 A1 soll hierdurch erreicht werden, dass die gemäß DE 32 46 962 A1 nur reibschlüssige Befestigung durch einen Formschluss ergänzt und verstärkt wird, so dass die Rollbälge mit größerer Sicherheit gegen jede nachteilige Axialversetzung festgelegt sind.

Die US-Patentschrift 5,460,354 beschreibt Befestigungsmittel für eine Hülse aus elastomerem Material, mit einem Spannring, der eine konvexe Erhebung aufweist und der zu einem Anschlussteil mit einer konkaven Vertiefung korrespondiert. Zwecks druckdichter Befestigung wird die aus Elastomer-Material bestehende Hülse derartig zwischen Spannring und Anschlussteil eingeklemmt, dass das Elastomer-Material seitlich herausgedrückt wird. Um eine druckfeste Verbindung zu erzielen, muss das Elastomer-Material auf ca. 50 % seiner ursprünglichen Materialstärke komprimiert werden. Da Elastomer-Material praktisch inkompressibel ist, ergibt sich theoretisch eine Längung um 100 % des Einspannbereichs. Da die flexible Hülse Verstärkungseinlagen aus Cord enthalten soll, kann dies nur bedeuten: Entweder ist die Cord-Einlage ähnlich dehnbar wie das Elastomer-Material oder nicht. Im letzteren Fall würde eine 50 %-ige Dickenreduktion zu einer Ablösung des Elastomer-Materials von der Festigkeitsträgereinlage führen. "Verstärkungs"-Einlagen mit einer gleichstarken Dehnbarkeit wie beim Elastomer-Material sind für den Einsatz in Luftfeder-Rollbälgen nicht geeignet.

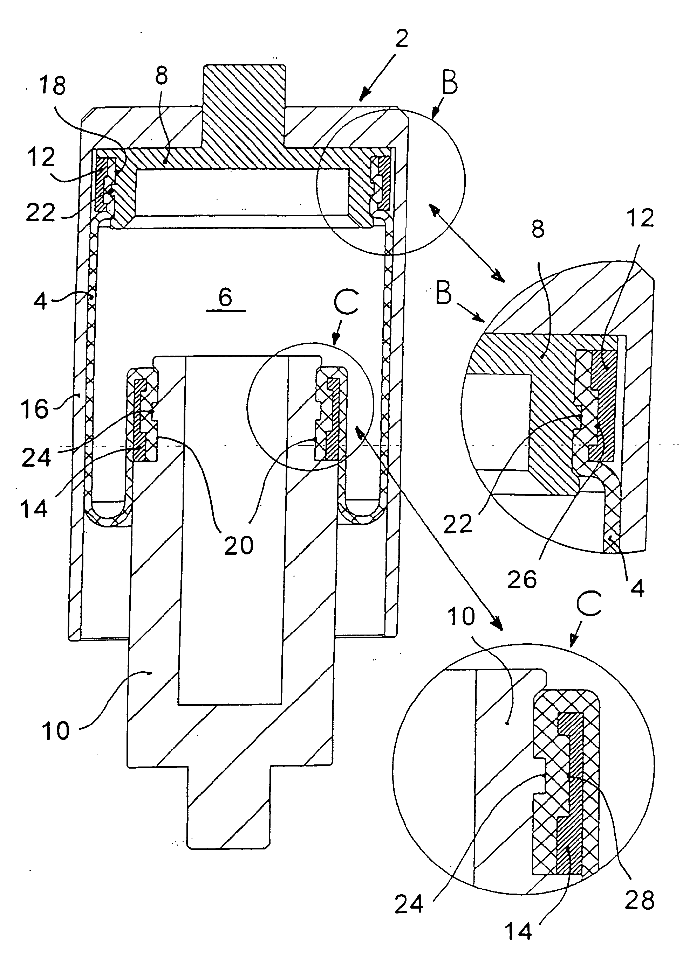

Bei der in der US-A-4,899,995 beschriebenen freistehenden 4-8 bar-Niederdruck-Luftfeder steht die Dichtigkeit zwischen Rollbalg und Klemmeinheit im Vordergrund. Die verbesserte Dichtheit soll durch starkes Einquetschen des jeweiligen Rollbalgendes zwischen Anschlussteil und Spannring erreicht werden. Da das Elastomer-Material des Rollbalgs praktisch inkompressibel ist, würde ein Einquetschen des Rollbalgendes um z.B. 50 % zu einer volumenneutralen Längung von 100 % rühren. Weil aber Schlauchrollbälge üblicherweise mit einer praktisch undehnbaren Verstärkungseinlage versehen sind, würde die durch das Einquetschen erzeugte Längung unweigerlich zu einer Ablösung des Elastomer-Materials von der Verstärkungseinlage und damit zu einer Zerstörung des Schlauchrollbalges führten. Um eine derartige, durch Längung erzeugte Zerstörung zu vermeiden, weist die Klemmkontur gemäß US-A-4,899,995 im Klemmbereich diverse Expansionsnuten auf, in die das "überflüssige" Gummi fließen soll. Am Balgende befindet sich ebenfalls eine Expansionsnut, um einen geraden Übergang zwischen Spannringoberfläche und Kolbenoberfläche zu ermöglichen. Falls der Rollbalg eine Verstärkungseinlage aufweist, (z.B. gemäß Fig. 2), ist diese im Einspannbereich lediglich leicht wellig verformt.
Es muss bezweifelt werden, dass eine derartig leichte Welligkeit der Verstärkungseinlage eine hinreichende Auszugsfestigkeit insbesondere bei Hochdruckfedern (30-180 bar) gewährleisten kann. Da sich das Elastomer-Material - ähnlich wie eine zähe Flüssigkeit - in beliebige Hohlräume drücken lässt, ist auch von den Expansionsnuten keine zusätzliche Auszugsfestigkeit zu erwarten.

Die US-A-5,347,037 beschreibt ebenfalls eine Rollbalg-Befestigung. Auch hier gibt es einen problematischen Einquetschvorgang. Um ein Ablösen des Elastomer-Materials von der Verstärkungseinlage zu vermeiden, sind auch hier Expansionsnuten vorgesehen. Da auch hier die Führung der Verstärkungseinlage lediglich leicht wellig ausgebildet ist, scheint auch hier eine insbesondere für Hochdruckluft-(bzw. Hydro-)Fedem erforderliche Auszugsfestigkeit nicht gegeben.

Die Aufgabe der vorliegenden Erfindung, wie sie mit Anspruch 1 im Wesentlichen gelöst ist, besteht in einer Weiterbildung dieses Befestigungssystems, wobei die Auszugsfestigkeit ohne Gefahr einer Materialentschädigung verbessert wird.

Laut Anspruch 1 sind die dem "oberen" und "unteren" Endabschnitt des Schlauchrollbalgs (SRB) zugeordneten Anschlussteile zumindest in einem axialen Teilabschnitt des eingezogenen Klemmbereichs mit aufgesetzten umlaufenden Erhebungen von rechteckiger Querschnittsform versehen. Im zugehörigen Spannring befindet sich eine umlaufende Vertiefung.
Durch die damit realisierte Umlenkung des Schlauchrollbalgs nebst Verstärkungseinlage wird der Schlauchrollbalg weder gequetscht noch gedehnt. Aus diesem Grunde besteht auch nicht die Gefahr einer Ablösung des elastomeren Schlauchrollbalg-Materials von der Verstärkungseinlage. Beschädigungen sind in keiner Weise zu befürchten.

Obwohl der Schlauchrollbalg zur endseitigen Befestigung nur leicht eingeklemmt aber nicht gequetscht wird, hat sich wider Erwarten gezeigt, dass die Befestigung auch für höhere Drücke bestens geeignet ist.

Insbesondere die in den Ansprüchen 2 und 3 ausgeführten Maßangaben haben sich als bevorzugte Abmessungen erwiesen. Durch die Anbringung einer Stützglocke, die den Schlauchrollbalg umhüllt, kann die Zugfestigkeit der endseitigen Schlauchrollbalg-Befestigung weiter verbessert werden.

Die erfindungsgemäße Klemmeinheit wird anhand einer im Längsschnitt dargestellten Schlauchrollbalg-Luftfeder, die eine Klemmkontur am Deckel und am Abrollkolben aufweist, näher erläutert.

Die in der Abbildung dargestellte Rollbalg-Luftfeder 2 weist einen Rollbalg 4 auf, der den Luftfederinnenraum 6 seitlich begrenzt. Der Rollbalg 4 ist als einfacher Schlauchkörper hergestellt, der keine Endwülste aufweist.
An seinem einen Ende ist der Rollbalg 4 an einem Deckel 8 und an seinem anderen Ende an einem Abrollkolben 10 mit Hilfe von jeweils einem Spannring 12, 14 druckdicht befestigt.

Deckel 8 und Rollbalg 4 sind von einer Stützglocke 16 umgeben. Die den Rollbalg-Enden zugeordneten Anschlussteile (Deckel 8 und Abrollkolben 10) weisen jeweils einen eingezogenen Klemmbereich 18 und 20 auf, der zumindest in einem axialen Teilabschnitt mit aufgesetzter umlaufender Erhebung 22, 24 von rechteckigem Querschnitt versehen ist.

Im jeweiligen Spannring 12, 14 (siehe Vergrößerungen B und C) befindet sich eine umlaufende Vertiefung 26, 28, ebenfalls von rechteckiger Querschnittsform. Die Kombination von umlaufender Erhebung 22, 24 im Klemmbereich 18, 20 des jeweiligen Anschlussteils 8,10 mit einer entsprechenden Vertiefung 26, 28 im zugeordneten Spannring 12, 14 bewirkt bei der Rollbalg-Montage nicht nur einen Formschluss sondern zudem auch eine Umlenkung der Verstärkungseinlage. Hierdurch wird die mechanisch stabile und druckdichte Befestigung erheblich verbessert. Der Schlauchrollbalg 4 ist so gegen jede nachteilige Axialversetzung festgelegt.

Für die Gesamtgestaltung der Spannringe 12, 14 haben sich u.a. die folgenden geometrischen Längen- und Breitenverhältnisse als vorteilhaft erwiesen:
Die Spannringbreite (-dicke) sollte ca. 3 mm betragen. Die Höhe der Spannringe 12, 14 sollte ca. 7 mal der Rollbalg-Wanddicke "b" entsprechen.

Die Höhe der rechteckigen Vertiefung 26, 28 im Spannring 12, 14 ca. 3,5 x "b", wobei die Vertiefung 26, 28 von dem einen Ende des Spannringes 12, 14 3,5 x "b" und von dem anderen Ende 0,5 x "b" entfernt ist.
Die Breite der rechteckigen Vertiefung 26, 28 im Spannring 12, 14 entspricht ca. 0,5 x "b". Für die Gestaltung der Anschlussteile (Abrollkolben 10 und Deckel 8) haben sich die folgenden Zirka-Maße als vorteilhaft erwiesen:
Die umlaufende Erhebung 22, 24 hat radial eine Höhe von ca. 0,5 x "b".
Die axiale Höhe der Erhebung 22, 24 ca. 1,5 x "b".
Der axiale Abstand der Erhebung 22, 24 zum eingezogenen Klemmbereich 18, 20 sollte ca. 3,5 x "b" betragen.

### Bezugszeichenliste

- 2: Schlauchrollbalg-Feder, Luftfeder, Federungssystem
- 4: Rollbalg, Schlauchrollbalg
- 6: (Luft-)Federinnenraum, Medium
- 8: Anschlussteil: Deckel
- 10: Anschlussteil: Abrollkolben
- 12: Spannring Deckel 8
- 14: Spannring Abrollkolben 10
- 16: Stützglocke
- 18: eingezogener Klemmbereich Deckel 8
- 20: eingezogener Klemmbereich Abrollkolben 10
- 22: Erhebung Klemmbereich Deckel 8
- 24: Erhebung Klemmbereich Abrollkolben 10
- 26: Vertiefung Spannring 12 Deckel 8
- 28: Vertiefung Spannring 14 Abrollkolben 10

## Patentansprüche

1. Im Wesentlichen aus Schlauchrollbalg (4) und Abrollkolben (10) bestehende Schlauchrollbalg-Feder (2) mit mindestens einer aus Anschlussteil (8, 10) und Spannring (12, 14) bestehenden Klemmeinheit zur druckdichten Befestigung des aus elastomerem Material bestehenden und mit einer Verstärkungseinlage versehenen Schlauchrollbalgs (4), dessen Enden weder Wülste noch Kerne aufweisen, an den als Anschlussteil dienenden Deckel (8) und/oder Abrollkolben (10) der Schlauchrollbalg-Feder (2), wobei der jeweilige Klemmbereich (18, 20) des Anschlussteils (Deckel, 8, und/oder Abrollkolben, 10) mit einer eingezogenen Anschlagfläche mit mindestens einer aufgesetzten, umlaufenden Erhebung (22, 24) ausgestattet ist, wobei der dem Klemmbereich (18, 20) des Anschlussteils (8, 10) zugeordnete Spannring (12, 14) eine umlaufende Vertiefung (26, 28) aufweist,
**dadurch gekenntzeichnet,**
- **dass** die auf der Anschlagfläche des jeweiligen Anschlussteils (8, 10) aufgesetzte umlaufende Erhebung (22, 24) und die im zugeordneten Spannring (12, 14) befindliche umlaufende Vertiefung (26, 28) einen rechteckigen Querschnitt aufweisen,
- wodurch sich beim Klemmvorgang ein Formschluss des eingeklemmten Rollbalgendes nebst Umlenkung der im Elastomermaterial des Rollbalgendes eingebetteten Verstärkungseinlage ergibt, und wobei die Dimensionierungen von Befestigungsteil, Spannring und Rollbalgenden-Dicke derartig aufeinander abgestimmt sind, dass das Rollbalgende im eingebauten Zustand nur leicht eingeklemmt, aber weder gequetscht noch gedehnt ist.

2. Schlauchrollbalg-Luftfeder nach Anspruch 1,
**dadurch gekennzeichnet,**
**dass** die Spannringbreite (dicke) ca. 3 mm beträgt,
**dass** die Höhe des Spannringes (12, 14) ca. 7 mal der Rollbalg-Wanddicke "b" entspricht,
**dass** die Höhe der rechteckigen Vertiefung im Spannring (12, 14) ca. 3,5 x "b" ist, wobei die Vertiefung von dem einen Ende des Spannringes (12, 14) 3,5 x "b" und von dem einen Ende des Spannringes 3,5 x "b" entfernt ist, und
**dass** die Breite der rechteckigen Vertiefung im Spannring (12, 14) ca. 0,5 x "b" ist.

3. Schlauchrollbalg-Luftfeder nach Anspruch 1 oder 2,
**dadurch gekennzeichnet,**
**dass** die in der Anschlagfläche des Anschlussteils (8, 10) befindliche umlaufende Erhebung radial eine Höhe von ca. 0,5 x "b" hat,
**dass** die axiale Höhe der Erhebung ca. 1,5 x "b" ist, und
**dass** der axiale Abstand der Erhebung zum eingezogenen Klemmbereich ca. 3,5 x "b" beträgt.

## Claims

1. Tubular rolling lobe spring (2) essentially comprising a tubular rolling lobe (4) and a rolling piston (10), with at least one clamping unit, comprising a connecting part (8, 10) and a clamping ring (12, 14), for the pressure-tight fastening of the tubular rolling lobe (4), which consists of elastomeric material, is provided with a reinforcing insert and the ends of which have neither beads nor cores, to the cover (8) and/or rolling piston (10) of the tubular rolling lobe spring (2), serving as a connecting part, the respective clamping region (18, 20) of the connecting part (cover 8, and/or rolling piston 10) being provided with a drawn-in stop face with at least one mounted peripheral elevation (22, 24), the clamping ring (12, 14) assigned to the clamping region (18, 20) of the connecting part (8, 10) having a peripheral depression (26, 28),
**characterized**
**in that** the peripheral elevation (22, 24) mounted on the stop face of the respective connecting part (8, 10) and the peripheral depression (26, 28) located in the assigned clamping ring (12, 14) have a rectangular cross section,
whereby a form fit of the clamped-in end of the rolling lobe is obtained during the clamping operation along with deflection of the reinforcing insert embedded in the elastomer material of the end of the rolling lobe, and the dimensioning of the fastening part, the clamping ring and the thickness of the end of the rolling lobe being made to match one another in such a way that, in the fitted state, the end of the rolling lobe is clamped in only lightly, but is neither pinched nor stretched.

2. Tubular rolling lobe spring according to Claim 1,
**characterized**
**in that** the width (thickness) of the clamping ring is about 3 mm,
**in that** the height of the clamping ring (12, 14) corresponds to about 7 times the wall thickness "b" of the rolling lobe,
**in that** the height of the rectangular depression in the clamping ring (12, 14) is about 3.5 x "b",
the depression being 3.5 x "b" away from one end of the clamping ring (12, 14) and 3.5 x "b" away from the other end of the clamping ring, and
**in that** the width of the rectangular depression in the clamping ring (12, 14) is about 0.5 x "b".

3. Tubular rolling lobe spring according to Claim 1 or 2,
**characterized**
**in that** the peripheral elevation located in the stop face of the connecting part (8, 10) radially has a height of about 0.5 x "b",
**in that** the axial height of the elevation is about 1.5 x "b", and
**in that** the axial distance of the elevation from the drawn-in clamping region is about 3.5 x "b".

## Revendications

1. Amortisseur (2) à soufflet déroulant en manchon, essentiellement constitué d'un soufflet déroulant en manchon (4) et d'un piston de déroulement (10), et qui présente au moins une unité de serrage constituée d'une pièce de raccordement (8, 10) et d'une bague de serrage (12, 14) pour fixer de manière étanche sous pression le soufflet déroulant en manchon (4) constitué d'un matériau élastomère doté d'une garniture de renfort et dont les extrémités ne présentent ni bourrelet ni âme sur le couvercle (8) qui sert de pièce de raccordement et/ou sur le piston de déroulement (10) de l'amortisseur (2) à soufflet déroulant en manchon, la partie de serrage (18, 20) de la pièce de raccordement concernée (couvercle 8 et/ou piston de déroulement 10) étant dotée d'une surface de butée en retrait sur laquelle est ménagé au moins un relief périphérique (22, 24), la bague de serrage (12, 14) associée à la zone de serrage (18, 20) de la pièce de raccordement (8, 10) présentant un creux périphérique (26, 28),
**caractérisé en ce que**
- le relief périphérique (22, 24) ménagé sur la surface de butée de la pièce de raccordement (8, 10) respective et le creux périphérique (26, 28) situé dans la bague de serrage (12, 14) associée ont une section transversale rectangulaire,
- grâce à quoi, lors de l'opération de serrage, on obtient une correspondance géométrique entre l'extrémité serrée du soufflet déroulant en plus d'une déviation de la garniture de renfort incorporée dans le matériau élastomère de l'extrémité du soufflet déroulant, et **en ce que**
- les dimensionnements de la pièce de fabrication, de la bague de serrage et de l'épaisseur de l'extrémité du soufflet déroulant sont accordés les uns aux autres de telle sorte que lorsque le soufflet déroulant est en position montée, son extrémité ne soit serrée que légèrement sans être écrasée ni allongée.

2. Amortisseur pneumatique à soufflet déroulant à manchon selon la revendication 1, **caractérisé**
**en ce que** la largeur (épaisseur) de la bague de serrage est d'environ 3 mm,
**en ce que** la hauteur de la bague de serrage (12, 14) correspond à environ 7 fois l'épaisseur "b" de la paroi du soufflet déroulant,
**en ce que** la hauteur du creux rectangulaire ménagée dans la barre de serrage (12, 14) est d'environ 3,5 x "b",
le creux étant situé à une distance de 3,5 x "b" d'une extrémité de la bague de serrage (12, 14) et à une distance de 3,5 x "b" de l'autre extrémité de la bague de serrage et
**en ce que** la largeur du creux rectangulaire ménagé dans la bague de serrage (12, 14) est d'environ 0,5 x "b".

3. Amortisseur pneumatique à soufflet déroulant en manchon selon les revendications 1 ou 2, **caractérisé en ce que**
le relief périphérique situé dans la surface de butée de la pièce de raccordement (8, 10) présente une hauteur radiale d'environ 0,5 x "b",
**en ce que** la hauteur axiale du relief est d'environ 1,5 x "b" et
**en ce que** la distance axiale entre le relief et la partie comprimée de serrage est d'environ 3,5 x "b".
